# EUROPÄISCHE PATENTSCHRIFT

(11) **EP 2 467 278 B1**
(45) Veröffentlichungstag und Bekanntmachung des Hinweises auf die Patenterteilung: **15.05.2013**
(21) Anmeldenummer: 10754264.9
(22) Anmeldetag: 31.07.2010
(51) Int. Cl.: B60K 23/02

(54) **KUPPLUNGSPEDALANORDNUNG**
CLUTCH PEDAL ARRANGEMENT
SYSTÈME DE PÉDALE D'EMBRAYAGE

(30) Priorität: 19.08.2009 DE 102009038051
(43) Veröffentlichungstag der Anmeldung: 27.06.2012
(73) Patentinhaber: Volkswagen Aktiengesellschaft, 38440 Wolfsburg (DE)
(72) Erfinder: EDLER, Martin, 38112 Braunschweig (DE); STEENECK, Udo, 37520 Osterode a. H. (DE)
(86) Internationale Anmeldenummer: PCT/EP2010/004706
(87) Internationale Veröffentlichungsnummer: WO 2011/020551

(56) Entgegenhaltungen:
- EP-A1- 1 614 576
- DE-A1- 2 741 742
- DE-A1- 4 025 147
- DE-A1- 10 011 760
- DE-A1- 19 919 339
- DE-A1-102005 050 760

## Beschreibung

Die Erfindung betrifft eine Kupplungspedalanordnung gemäß der Merkmalskombination des Patentanspruchs 1.

Aus der Praxis ist es seit geraumer Zeit bekannt, eine die Kupplungsbetätigung unterstützende Zugfeder so anzuordnen, dass diese zunächst der Kupplungspedalbetätigung entgegen und nach einem bestimmten Schwenkweg des Pedalhebels ein Moment erzeugt, welches im gleichen Sinne wie die vom Fahrzeugführer aufgewendete Pedalkraft wirkt. Derartige Anordnungen wirken nach dem an sich bekannten Übertotpunktfeder-Prinzip, bei dem sich der Kraftvektor nach Überschreiten des Übertotpunktes (Kraftumkehrpunktes) umkehrt (vgl. DE 27 41 742 A1; DE 40 25 147 C2).

Überdies ist aus der DE 10 2005 050 760 A1 eine Kupplungsanordnung für ein Fahrzeug, insbesondere Kraftfahrzeug, mit einer hydraulischen Kupplungsbetätigung, sowie mit einem in einem Lagerbock um eine Drehachse schwenkbeweglich gelagerten Pedalhebel bekannt, wobei ein erster Hebelarm desselben an seinem freien Ende eine Pedalplatte trägt und ein zweiter Hebelarm der Anbindung eines Endes zumindest einer Zugfeder nach Art einer Rückstellfeder dient, die anderenends am Lagerbock oder einem anderen geeigneten ortsfesten Bauteil des Fahrzeugs angebunden ist.

Aus der Praxis ist es des Weiteren im Hinblick auf eine an sich bekannte hydraulische Kupplungsbetätigung bekannt, dass eine gegen die vom Fahrzeugführer aufgewendete Pedalkraft einwirkende Kraft der Kupplungshydraulik (Gegenkraft) beim Betätigen des Pedalhebels mit größer werdenden Schwenkweg des Pedalhebels besagte Gegenkraft ansteigt. Findet eine an sich bekannte, die Betätigung des Pedalhebels unterstützende Übertotpunktfeder Anwendung, ist nach Überwindung des Übertotpunktes zwar eine bestimmte Unterstützungskraft zu verzeichnen, jedoch verringert sich dieselbe mit zunehmendem Schwenkweg, welches als nicht optimal für den Fahrzeugführer eingeschätzt wird. Hier setzt die nachfolgend beschriebene Erfindung an.

Aufgabe der Erfindung ist es, eine im Hinblick auf den Stand der Technik alternative Kupplungspedalanordnung für ein Fahrzeug, insbesondere Kraftfahrzeug, mit hydraulischer Kupplungsbetätigung zu schaffen, welche es gestattet, die auf den Fahrzeugführer wirkenden Kräfte beim Betätigen des Kupplungspedals so optimal wie möglich zu gestalten.

Die Erfindung geht von der Erkenntnis aus, dass bei Betätigung des Kupplungspedals mit ansteigender Kraft der Kupplungshydraulik die Gegenkraft der Zugfeder über den gesamten Pedalbetätigungsweg abnehmen sollte, um optimale Betätigungskräfte für den Fahrzeugführer zu erhalten.

Ausgehend von einer Kupplungspedalanordnung für ein Fahrzeug, insbesondere Kraftfahrzeug, mit hydraulischer Kupplungsbetätigung, sowie mit einem in einem Lagerbock um eine Drehachse schwenkbeweglich gelagerten Pedalhebel, wobei ein erster Hebelarm desselben an seinem freien Ende eine Pedalplatte trägt und ein zweiter Hebelarm der Anbindung eines Endes zumindest einer Zugfeder nach Art einer Rückstellfeder dient, die anderenends am Lagerbock oder einem anderen geeigneten ortsfesten Bauteil des Fahrzeugs angebunden ist, wird die gestellte Aufgabe dadurch gelöst, dass eine bei Betätigung des Pedalhebels zum Öffnen der Kupplung zu überwindende Gegenkraft der Kupplungshydraulik mit zunehmendem Betätigungsweg des Pedalhebels ansteigt, wobei die zumindest eine Zugfeder derart angeordnet und beidenends abgestützt ist, dass dieselbe bei Betätigung des Pedalhebels zum Öffnen der Kupplung zusätzlich zur auf den Pedalhebel wirkenden Gegenkraft der Kupplungshydraulik über den gesamten Betätigungsweg des Pedalhebels eine Gegenkraft erzeugt, die mit zunehmendem Betätigungsweg des Pedalhebels abnimmt.

Durch diese Maßnahme wird in der Abkehr vom Üblichen ein Weg eingeschlagen, bei dem die Zugfeder während des gesamten Pedalbetätigungsweges respektive Schwenkweges des Pedalhebels zwar gestreckt wird, jedoch gestattet ist, die auf den Fahrzeugführer wirkenden Kräfte beim Betätigen des Kupplungspedals dahingehend optimaler zu gestalten, dass trotz ansteigender Gegenkraft der Kupplungshydraulik über den gesamten Betätigungsweg des Pedalhebels ein wesentlich verminderter Gegenkraft-Anstieg oder gar ein gleichbleibendes Kraftniveau realisierbar ist.

Die Unteransprüche beschreiben bevorzugte Weiterbildungen oder Ausgestaltungen der Erfindung.

Danach kann vorgesehen sein, dass die zumindest eine Zugfeder derart angeordnet und beidenends abgestützt ist, dass dieselbe während des gesamten, eine Ausgangs- und eine Endstellung aufweisenden Betätigungsweges des Pedalhebels gestreckt wird, jedoch der wirksame Hebel der Zugfeder auf den Pedalhebel abnimmt, wodurch sich das auf den Pedalhebel wirkende Moment reduziert. Vorteilhaft kann dabei die zumindest eine Zugfeder derart angeordnet und beidenends abgestützt sein, dass in einer ersten Betriebsstellung der Zugfeder, welche der Ausgangsstellung des Pedalhebels bei geschlossener Kupplung .entspricht, der Anbindungspunkt der Zugfeder am zweiten Hebelarm des Pedalhebels derart außerhalb einer imaginären, den Anbindungspunkt der Zugfeder am Lagerbock oder einem anderen geeigneten ortsfesten Bauteil des Fahrzeugs und die Drehachse des Pedalhebels durchsetzenden Geraden angeordnet ist, dass bei Betätigung des Pedalhebels zum Öffnen der Kupplung der Anbindungspunkt der Zugfeder am zweiten Hebelarm des Pedalhebels sich der besagten imaginären Geraden annähert. Weiter vorteilhaft kann die zumindest eine Zugfeder derart angeordnet und beidenends abgestützt sein, dass in einer weiteren Betriebsstellung der Zugfeder, welche der Endstellung des Pedalhebels bei voll geöffneter Kupplung entspricht, der Anbindungspunkt der Zugfeder am zweiten Hebelarm des Pedalhebels derart dicht an die imaginäre, den Anbindungspunkt der Zugfeder am Lagerbock oder einem anderen geeigneten ortsfesten Bauteil des Fahrzeugs und die Drehachse des Pedalhebels durchsetzende Gerade angenähert ist, dass unter Berücksichtigung der verstellwegsabhängigen Gegenkraft der Kupplunghydraulik auf den Pedalhebel zwar die von der Zugfeder auf den Pedalhebel aufgebrachte Gegenkraft minimiert, jedoch der Rückstelleffekt der Zugfeder zur Überführung des Pedalhebels in seine Ausgangsstellung nach wie vor gewährleistet ist. Durch diese Maßnahme ist verhindert, dass der Anbindungspunkt der Zugfeder am zweiten Hebelarm des Pedalhebels innerhalb besagter Geraden angeordnet ist, wodurch die Rückstellwirkung der Zugfeder auf den Pedalhebel unterbunden wäre.

Wie bereits oben angedeutet, können besonders vorteilhaft die Kupplungshydraulik und die Federkinematik der zumindest einen Zugfeder sowie deren Anbindungen am Pedalhebel und am Lagerbock oder einem anderen geeigneten ortsfesten Bauteil des Fahrzeugs derart ausgelegt sein, dass die Summe der auf den Pedalhebel wirkenden Gegenkräfte der Kupplungshydraulik und der zumindest einen Zugfeder über den gesamten Betätigungsweg des Pedalhebels im Wesentlichen gleich bleibt. D. h., die Gegenkraft der zumindest einen Zugfeder nimmt vorteilhafterweise in dem Maße ab, wie die Gegenkraft der Kupplungshydraulik ansteigt. Insoweit können zur Einstellung einer optimalen Federkinematik zwei oder mehr Zugfedern vorgesehen sein, die ihrerseits unterschiedliche Federeigenschaften aufweisen. Die Zugfedern können dabei parallel und/oder in Reihe geschaltet sein.

Des Weiteren kann der Lagerbock über zwei gegenüberliegend angeordnete Seitenwangen verfügen, zwischen denen der Pedalhebel mittels an den Seitenwangen abgestützter Lagerachse schwenkgelagert und zwischen denen die zumindest eine Zugfeder geführt ist. Im Hinblick auf die durch die Fachwelt überwiegend favorisierte seitliche Anordnung einer den Pedalhebel in seiner Rückstellbewegung unterstützenden Zugfeder ist durch diese Maßnahme in vorteilhafter Weise deutlich weniger Bauraum erforderlich.

Um eine größtmögliche Annäherung des Anbindungspunktes der Zugfeder am zweiten Hebelarm des Pedalhebels an die imaginäre, den Anbindungspunkt der Zugfeder am Lagerbock oder einem anderen geeigneten ortsfesten Bauteil des Fahrzeugs und die Drehachse des Pedalhebels durchsetzende Gerade zu gestatten, kann die zumindest eine Zugfeder im Bereich der Lagerachse gewölbt ausgebildet sein oder ein derart gewölbtes Kraftübertragungselement aufweisen.

Schließlich betrifft die Erfindung auch ein Fahrzeug, insbesondere Kraftfahrzeug, mit einer Kupplungspedalanordnung der oben beschriebenen Art.

Die Erfindung wird nachstehend anhand eines in den Zeichnungen schematisch dargestellten Ausführungsbeispieles näher erläutert. Es zeigen:
- Fig. 1: eine erfindungsgemäß ausgebildete Kupplungspedalanordnung in einer perspektivischen Ansicht von schräg oben,
- Fig. 2: die Kupplungspedalanordnung mit einem sich in einer Ausgangsstellung befindlichen Pedalhebel (Kupplung geschlossen),
- Fig. 3: die Kupplungspedalanordnung mit einem sich in einer Endstellung befindlichen Pedalhebel (Kupplung geöffnet),
- Fig. 4: die Kupplungspedalanordnung nach Fig. 2 in einer äußerst schematischen Schnittansicht (Kupplung geschlossen),
- Fig. 5: die Kupplungspedalanordnung nach Fig. 3 in einer äußerst schematischen Schnittansicht (Kupplung geöffnet), und
- Fig. 6: ein Diagramm, welches die Veränderung der von der zumindest einen Zugfeder auf den Pedalhebel gegen die Fußbetätigung des Fahrzeugführers wirkende Gegenkraft über den Betätigungsweg des Pedalhebels (Pedalweg) zeigt.

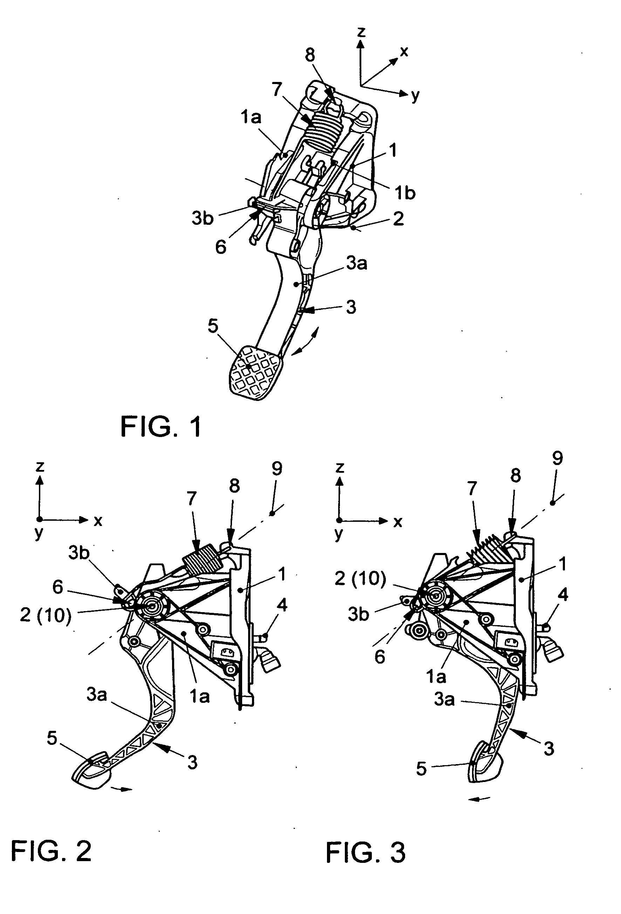

Die Fig. 1 bis 3 zeigen danach eine Kupplungspedalanordnung für ein Fahrzeug, insbesondere Kraftfahrzeug, mit hydraulischer Kupplungsbetätigung, welche bekanntermaßen eine von einem Fahrzeugführer auf ein Kupplungspedal aufgebrachte Pedalkraft vermittels eines nicht näher dargestellten, jedoch an sich bekannten Geberzylinders und Nehmerzylinders hydraulisch übersetzt und an einen Ausrücker einer ebenfalls an sich bekannten und demgemäß nicht näher dargestellten Reibungskupplung weiterleitet.

Die Fußkraft des Fahrzeugführers wird dabei über einen in einem Lagerbock 1 um eine Drehachse 2 schwenkbeweglich gelagerten Pedalhebel 3 des Kupplungspedals und ein Gestänge 4 auf den Kolben des besagten Geberzylinders übertragen. Der im Druckraum des Geberzylinders erzeugte Fluiddruck pflanzt sich in zugeordneten Fluidleitungen bis zum Nehmerzylinder fort und bewirkt am Kolben des Nehmerzylinders eine Kraft, die über ein oder mehrere Betätigungsglieder, wie beispielsweise einem Stößel mit angeschlossenem Ausrückhebel den Ausrücker betätigt und die Kupplung auskuppelt respektive öffnet. Zum Einkuppeln respektive zum Schließen der Kupplung drückt eine Membranfeder der Kupplung über den Ausrücker, den Ausrückhebel sowie den Stößel die Kolben von Nehmerzylinder und Geberzylinder samt den Pedalhebel 3 in die Ausgangsstellung zurück.

Der Pedalhebel 3 trägt am freien Ende eines ersten Hebelarmes 3a eine Pedalplatte 5 und verfügt über einen zweiten Hebelarm 3b, der seinerseits einen Anbindungspunkt 6 zur Anbindung eines Endes einer Zugfeder 7 aufweist. Anderenends ist besagte Zugfeder 7 vorliegend in einem am Lagerbock 1 angeordneten Anbindungspunkt 8 angebunden.

Die Zugfeder 7 wirkt hierbei als Rückstellfeder zur Rückstellung des Pedalhebels 3 in seine Ausgangsstellung, und erzeugt über den gesamten Betätigungsweg des Pedalhebels 3 eine gegen die vom Fahrzeugführer auf den Pedalhebel 3 aufgebrachte Betätigungskraft wirkende Gegenkraft.

Aufgrund der oben bereits erwähnten Erscheinung, dass eine gegen die vom Fahrzeugführer aufgewendete Pedalkraft einwirkende Kraft der Kupplungshydraulik (Gegenkraft) beim Betätigen des Pedalhebels 3 mit größer werdendem Betätigungsweg bzw. Schwenkweg des Pedalhebels 3 besagte Gegenkraft ansteigt, würden sich die von der Kupplungshydraulik und von der Zugfeder 7 auf den Pedalhebel 3 wirkenden Gegenkräfte addieren, wobei ein Anstieg derselben von der Ausgangsstellung bis zur Endstellung des Padalhebels 3 zu verzeichnen ist. D. h., zu Beginn des Niederdrückens des Pedalhebels 3 ist die Summe der Gegenkräfte gering, wogegen bei vollständig durchgetretenem Pedalhebel 3 des Kupplungspedals die Summe der Gegenkräfte hoch ist. Ein derartiger Kraftanstieg wird seitens des Fahrzeugführers als unangenehm respektive nachteilig empfunden.

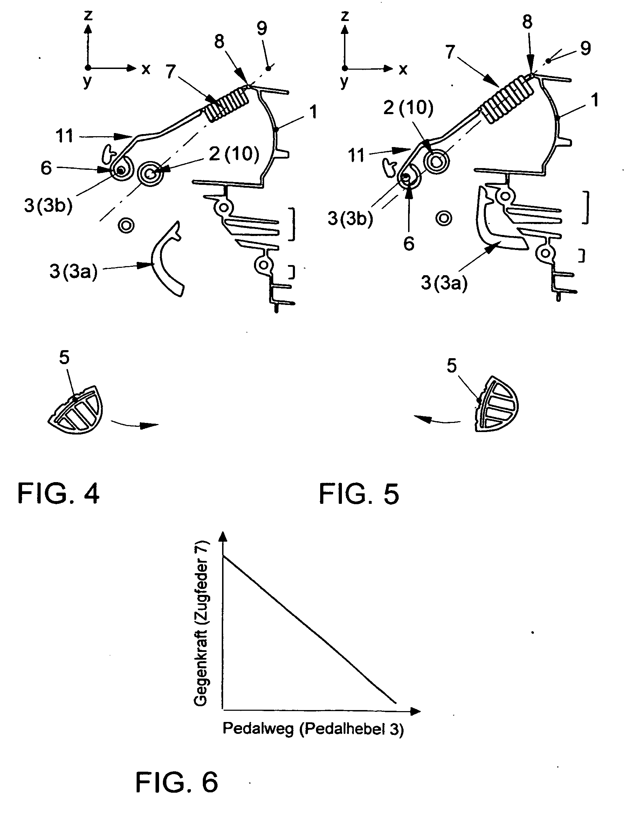

Um diesem nachteiligen Umstand zu begegnen, ist wie in den Fig. 2 und 4 näher gezeigt, in einer ersten Betriebsstellung der Zugfeder 7, welche der Ausgangsstellung des Pedalhebels 3 bei geschlossener Kupplung entspricht, der Anbindungspunkt 6 der Zugfeder 7 am zweiten Hebelarm 3b des Pedalhebels 3 außerhalb, vorliegend oberhalb einer imaginären, den Anbindungspunkt 8 der Zugfeder 7 am Lagerbock 1 und die Drehachse 2 des Pedalhebels 3 durchsetzenden Geraden 9 angeordnet.

Wird der Pedalhebel 3 zum Öffnen der Kupplung vom Fahrzeugführer durchgedrückt, nähert sich der Anbindungspunkt 8 der Zugfeder 7 am zweiten Hebelarm 3b des Pedalhebels 3 sich der besagten imaginären Geraden 9 an, wodurch der wirksame Hebel der Zugfeder 7 auf den Pedalhebel 3 vorteilhaft abnimmt und sich die von der Zugfeder 7 auf den Pedalhebel 3 wirkende Gegenkraft respektive das auf den Pedalhebel 3 wirkende Moment reduzieren (Fig. 3, 5 und 6).

Im Ergebnis sind optimale Betätigungskräfte für den Fahrzeugführer realisierbar, indem bei Betätigung des Pedalhebels 3 der Anstieg der Summe der Gegenkräfte durch die Reduzierung der durch die Zugfeder 7 bewirkten Gegenkraft kompensiert, zumindest jedoch maßgeblich reduziert wird.

Durch Auslegung der Kupplungshydraulik und der Federkinematik der Zugfeder 7 kann besonders komfortabel eine summierte Gegenkraft bewirkt werden, die über den gesamten Betätigungsweg des Pedalhebels 3 vorzugsweise nahezu gleich ist.

Was die Einstellung einer optimalen Federkinematik in Abhängigkeit von der Kupplungshydraulik anbelangt, kann es angezeigt sein, zwei oder mehr parallel und/oder in Reihe geschaltete Zugfedern 7 vorzusehen, die ihrerseits unterschiedliche Federeigenschaften aufweisen können (nicht näher dargestellt).

Für den Fachmann sicherlich leicht nachvollziehbar, sollte der Anbindungspunkt 6 der Zugfeder 7 am zweiten Hebelarm 3b des Pedalhebels 3 während der Betätigung desselben lediglich derart dicht an die besagte imaginäre Gerade 9 angenähert werden, dass unter Berücksichtigung der verstellwegsabhängigen Gegenkraft der Kupplungshydraulik auf den Pedalhebel 3 zwar die von der Zugfeder 7 auf den Pedalhebel 3 aufgebrachte Gegenkraft minimiert, jedoch der Rückstelleffekt der Zugfeder 7 zur Überführung des Pedahelbels 3 in seine Ausgangsstellung nach wie vor gewährleistet ist. Kurz gesagt ist zu vermeiden, dass der Anbindungspunkt 6 der Zugfeder 7 am zweiten Hebelarm 3b des Pedalhebels 3 in seiner Endstellung, d. h., im voll durchgedrückten Zustand nicht auf der besagten imaginären Geraden 9 zum liegen kommt. Insoweit bietet es sich an, einen an sich bekannten und demgemäß hier nicht näher dargestellten Anschlag für den Pedalhebel 3 vorzusehen, der während der Betätigung dessen Auslenkung entsprechend begrenzt.

Wie insbesondere der Fig. 1 zu entnehmen ist, verfügt der Lagerbock 1 über zwei gegenüberliegend angeordnete Seitenwangen 1 a, 1 b, zwischen denen der Pedalhebel 3 mittels an den Seitenwangen 1 a, 1 b abgestützter Lagerachse 10 schwenkgelagert ist.

Die Zugfeder 7 ist vorteilhaft zwischen den besagten Seitenwangen 1 a, 1 b geführt, wodurch im Hinblick auf die durch die Fachwelt überwiegend favorisierte seitliche Anordnung einer den Pedalhebel 3 in seiner Rückstellbewegung unterstützenden Zugfeder 7 deutlich weniger Bauraum erforderlich ist.

Um auch in diesem Fall eine größtmögliche Annäherung des Anbindungspunktes 6 der Zugfeder 7 am zweiten Hebelarm 3b des Pedalhebels 3 an die imaginäre, den Anbindungspunkt 8 der Zugfeder 7 am Lagerbock 1 und die Drehachse 2 des Pedalhebels 3 durchsetzende Gerade 9 zu gestatten, ist die Zugfeder 7, vorliegend ein Federende derselben, im Bereich der Lagerachse 10 mit einer Wölbung 11 ausgebildet. Denkbar ist es jedoch auch, und demgemäß durch die Erfindung mit erfasst, die Zugfeder 7 in diesem Bereich geteilt auszubilden und ein derart gewölbtes zwischengeschaltetes Kraftübertragungselement vorzusehen (nicht näher dargestellt).

### Bezugszeichenliste

| | |
|---|---|
| 1 | Lagerbock |
| 1a | Seitenwange |
| 1b | Seitenwange |
| 2 | Drehachse (Pedalhebel 3) |
| 3 | Pedalhebel |
| 3a | erster Hebelarm |
| 3b | zweiter Hebelarm |
| 4 | Gestänge |
| 5 | Pedalplatte |
| 6 | Anbindungspunkt (Zugfeder 7 / zweiter Hebelarm 3b) |
| 7 | Zugfeder |
| 8 | Anbindungspunkt (Zugfeder 7 / Lagerbock 1) |
| 9 | Gerade (Verbindungs-Gerade Anbindungspunkt 8 / Drehachse 2) |
| 10 | Lagerachse |
| 11 | Wölbung (Zugfeder 7) |

## Patentansprüche

1. Kupplungspedalanordnung für ein Fahrzeug, insbesondere Kraftfahrzeug, mit einer hydraulischen Kupplungsbetätigung, sowie mit einem in einem Lagerbock (1) um eine . Drehachse (2) schwenkbeweglich gelagerten Pedalhebel (3), wobei ein erster Hebelarm (3a) desselben an seinem freien Ende eine Pedalplatte (5) trägt und ein zweiter Hebelarm (3b) der Anbindung eines Endes zumindest einer Zugfeder (7) nach Art einer Rückstellfeder dient, die anderenends am Lagerbock (1) oder einem anderen geeigneten ortsfesten Bauteil des Fahrzeugs angebunden ist, **dadurch gekennzeichnet, dass** eine bei Betätigung des Pedalhebels (3) zum Öffnen der Kupplung zu überwindende Gegenkraft der Kupplungshydraulik mit zunehmendem Betätigungsweg des Pedalhebels (3) ansteigt, wobei die zumindest eine Zugfeder (7) derart angeordnet und beidenends abgestützt ist, dass dieselbe bei Betätigung des Pedalhebels (3) zum Öffnen der Kupplung zusätzlich zur auf den Pedalhebel (3) wirkenden Gegenkraft der Kupplungshydraulik über den gesamten Betätigungsweg des Pedaihebels (3) eine Gegenkraft erzeugt, die mit zunehmendem Betätigungsweg des Pedalhebels (3) abnimmt.

2. Kupplungspedalanordnung nach Anspruch 1, **dadurch gekennzeichnet, dass** die zumindest eine Zugfeder (7) derart angeordnet und beidenends abgestützt ist, dass dieselbe während des gesamten, eine Ausgangs- und eine Endstellung aufweisenden Betätigungsweges des Pedalhebels (3) gestreckt wird, jedoch der wirksame Hebel der Zugfeder (7) auf den Pedalhebel (3) abnimmt, wodurch sich das auf den Pedalhebel (3) wirkende Moment reduziert.

3. Kupplungspedalanordnung nach Anspruch 2, **dadurch gekennzeichnet, dass** die zumindest eine Zugfeder (7) derart angeordnet und beidenends abgestützt ist, dass in einer ersten Betriebsstellung der Zugfeder (7), welche der Ausgangsstellung des Pedalhebels (3) bei geschlossener Kupplung entspricht, der Anbindungspunkt (6) der Zugfeder (7) am zweiten Hebelarm (3b) des Pedalhebels (3) derart außerhalb einer imaginären, den Anbindungspunkt (8) der Zugfeder (7) am Lagerbock (1) oder einem anderen geeigneten ortsfesten Bauteil des Fahrzeugs und die Drehachse (2) des Pedalhebels (3) durchsetzenden Geraden (9) angeordnet ist, dass bei Betätigung des Pedalhebels (3) zum Öffnen der Kupplung der Anbindungspunkt (6) der Zugfeder (7) am zweiten Hebelarm (3b) des Pedalhebels (3) sich der besagten imaginären Geraden (9) annähert.

4. Kupplungspedalanordnung nach Anspruch 2 oder 3, **dadurch gekennzeichnet, dass** die zumindest eine Zugfeder (7) derart angeordnet und beidenends abgestützt ist, dass in einer weiteren Betriebsstellung der Zugfeder (7), welche der Endstellung des Pedalhebels (3) bei voll geöffneter Kupplung entspricht, der Anbindungspunkt (6) der Zugfeder (7) am zweiten Hebelarm (3b) des Pedalhebels (3) derart dicht an die imaginäre, den Anbindungspunkt (8) der Zugfeder (7) am Lagerbock (1) oder einem anderen geeigneten ortsfesten Bauteil des Fahrzeugs und die Drehachse (2) des Pedalhebels (3) durchsetzende Gerade (9) angenähert ist, dass unter Berücksichtigung der verstellwegsäbhängigen Gegenkraft der Kupplungshydraulik auf den Pedalhebel (3) zwar die von der Zugfeder (7) auf den Pedalhebel (3) aufgebrachte Gegenkraft minimiert, jedoch der Rückstelleffekt der Zugfeder (7) zur Überführung des Pedalhebels (3) in seine Ausgangsstellung nach wie vor gewährleistet ist.

5. Kupplungspedalanordnung nach einem der Ansprüche 1 bis 4, **dadurch gekennzeichnet, dass** die Kupplungshydraulik und die Federkinematik der zumindest einen Zugfeder (7) sowie deren Anbindungen am Pedalhebel (3) und am Lagerbock (1) oder einem anderen geeigneten ortsfesten Bauteil des Fahrzeugs derart ausgelegt sind, dass die Summe der auf den Pedalhebel (3) wirkenden Gegenkräfte der Kupplungshydraulik und der zumindest einen Zugfeder (7) über den gesamten Betätigungsweg des Pedalhebels (3) im Wesentlichen gleich bleibt.

6. Kupplungspedalanordnung nach Anspruch 5, **dadurch gekennzeichnet, dass** zur Einstellung einer optimalen Federkinematik zwei oder mehr Zugfedern (7) vorgesehen sind, die ihrerseits unterschiedliche Federeigenschaften aufweisen.

7. Kupplungspedalanordnung nach Anspruch 6, **dadurch gekennzeichnet, dass** die Zugfedern (7) parallel und/oder in Reihe geschaltet sind.

8. Kupplungspedalanordnung nach einem der Ansprüche 1 bis 7, **dadurch gekennzeichnet, dass** der Lagerbock (1) über zwei gegenüberliegend angeordnete Seitenwangen (1a, 1 b) verfügt, zwischen denen der Pedalhebel (3) mittels an den Seitenwangen (1 a, 1b) abgestützter Lagerachse (10) schwenkgelagert und zwischen denen die zumindest eine Zugfeder (7) geführt ist.

9. Kupplungspedalanordnung nach Anspruch 8, **dadurch gekennzeichnet, dass** die zumindest eine Zugfeder (7) im Bereich der Lagerachse (10) derart gewölbt ausgebildet ist oder ein derart gewölbtes Kraftübertragungselement aufweist, dass eine größtmögliche Annäherung des Anbindungspunktes (6) der Zugfeder (7) am zweiten Hebelarm (3b) des Pedalhebels (3) an die imaginäre, den Anbindungspunkt (8) der Zugfeder (7) am Lagerbock (1) oder einem anderen geeigneten ortsfesten Bauteil des Fahrzeugs und die Drehachse (2) des Pedalhebels (3) durchsetzende Gerade (9) gestattet ist.

10. Fahrzeug, insbesondere Kraftfahrzeug, mit einer Kupplungspedalanordnung nach einem der Ansprüche 1 bis 9.

## Claims

1. Clutch pedal arrangement for a vehicle, in particular a motor vehicle, having a hydraulic clutch actuation means, and having a pedal lever (3) which is mounted in a bearing block (1) such that it can be moved pivotably about a rotational axis (2), a first lever arm (3a) of the said pedal lever (3) carrying a pedal plate (5) at its free end and a second lever arm (3b) serving to attach an end of at least one tension spring (7) in the manner of a restoring spring which is attached at the other end to the bearing block (1) or another suitable stationary component of the vehicle, **characterized in that** a counterforce of the clutch hydraulic system which is to be overcome upon actuation of the pedal lever (3) in order to open the clutch rises as the actuating travel of the pedal lever (3) increases, the at least one tension spring (7) being supported at both ends and being arranged in such a way that, upon actuation of the pedal lever (3) in order to open the clutch, the said tension spring (7) generates, over the entire actuating travel of the pedal lever (3), a counterforce which decreases as the actuating travel of the pedal lever (3) increases, in addition to the counterforce of the clutch hydraulic system which acts on the pedal lever (3).

2. Clutch pedal arrangement according to Claim 1, **characterized in that** the at least one tension spring (7) is supported at both ends and is arranged in such a way that, during the entire actuating travel of the pedal lever (3) which has a starting position and an end position, the said tension spring (7) is stretched, but the effective lever of the tension spring (7) on the pedal lever (3) decreases, as a result of which the moment which acts on the pedal lever (3) is reduced.

3. Clutch pedal arrangement according to Claim 2, **characterized in that** the at least one tension spring (7) is supported at both ends and is arranged in such a way that, in a first operating position of the tension spring (7) which corresponds to the starting position of the pedal lever (3) when the clutch is closed, the attachment point (6) of the tension spring (7) on the second lever arm (3b) of the pedal lever (3) is arranged outside an imaginary straight line (9) which penetrates the attachment point (8) of the tension spring (7) on the bearing block (1) or another suitable stationary component of the vehicle and the rotational axis (2) of the pedal lever (3), in such a way that, upon actuation of the pedal lever (3) in order to open the clutch, the attachment point (6) of the tension spring (7) on the second lever arm (3b) of the pedal lever (3) converges with the said imaginary straight line (9).

4. Clutch pedal arrangement according to Claim 2 or 3, **characterized in that** the at least one tension spring (7) is supported at both ends and is arranged in such a way that, in a further operating position of the tension spring (7) which corresponds to the end position of the pedal lever (3) in the case of a fully open clutch, the attachment point (6) of the tension spring (7) on the second lever arm (3b) of the pedal lever (3) is converged closely with the imaginary straight line (9) which penetrates the attachment point (8) of the tension spring (7) on the bearing block (1) or another suitable stationary component of the vehicle and the rotational axis (2) of the pedal lever (3), in such a way that, although, with consideration of the adjusting-travel-dependent counterforce of the clutch hydraulic system on the pedal lever (3), the counterforce which is applied to the pedal lever (3) by the tension spring (7) is minimized, the restoring effect of the tension spring (7) for transferring the pedal lever (3) into its starting position is still ensured.

5. Clutch pedal arrangement according to one of Claims 1 to 4, **characterized in that** the clutch hydraulic system and the spring kinematics of the at least one tension spring (7) and its attachments on the pedal lever (3) and on the bearing block (1) or another suitable stationary component of the vehicle are designed in such a way that the sum of the counterforces, acting on the pedal lever (3), of the clutch hydraulic system and of the at least one tension spring (7) remains substantially identical over the entire actuating travel of the pedal lever (3).

6. Clutch pedal arrangement according to Claim 5, **characterized in that**, in order to set optimum spring kinematics, two or more tension springs (7) are provided which for their part have different spring properties.

7. Clutch pedal arrangement according to Claim 6, **characterized in that** the tension springs (7) are connected in parallel and/or in series.

8. Clutch pedal arrangement according to one of Claims 1 to 7, **characterized in that** the bearing block (1) has two side cheeks (1a, 1b) which are arranged so as to lie opposite one another, between which the pedal lever (3) is pivotably mounted by means of a bearing pin (10) which is supported on the side cheeks (1a, 1b), and between which the at least one tension spring (7) is guided.

9. Clutch pedal arrangement according to Claim 8, **characterized in that** the at least one tension spring (7) is of curved configuration in the region of the bearing pin (10) in such a way, or has a force transmission element which is curved in such a way that as great a convergence as possible of the attachment point (6) of the tension spring (7) on the second lever arm (3b) of the pedal lever (3) with the imaginary straight line (9) which penetrates the attachment point (8) of the tension spring (7) on the bearing block.(1) or another suitable stationary component of the vehicle and the rotational axis (2) of the pedal lever (3) is permitted.

10. Vehicle, in particular motor vehicle, having a clutch pedal arrangement according to one of Claims 1 to 9.

## Revendications

1. Système de pédale d'embrayage pour un véhicule, en particulier un véhicule automobile, comprenant une commande d'embrayage hydraulique ainsi qu'un levier de pédale (3) monté de manière à pouvoir pivoter autour d'un axe de rotation (2) dans un coussinet (1), un premier bras de levier (3a) dudit levier portant à son extrémité libre une plaque de pédale (5) et un deuxième bras de levier (3b) servant à la liaison d'une extrémité d'au moins un ressort de traction (7) du type d'un ressort de rappel, qui est relié à l'autre extrémité au coussinet (1) ou à un autre composant fixe approprié du véhicule, **caractérisé en ce qu'**une force opposée du système hydraulique d'embrayage, devant être surmontée pour ouvrir l'embrayage lors de l'actionnement du levier de pédale (3), augmente avec l'augmentation de la course d'actionnement du levier de pédale (3), l'au moins un ressort de traction (7) étant disposé et supporté aux deux extrémités de telle sorte que celui-ci, lors de l'actionnement du levier de pédale (3), produise une force opposée pour l'ouverture de l'embrayage en plus de la force opposée du système hydraulique d'embrayage agissant sur le levier de pédale (3), sur toute la course d'actionnement du levier de pédale (3), laquelle force opposée diminue avec l'augmentation de la course d'actionnement du levier de pédale (3).

2. Système de pédale d'embrayage selon la revendication 1, **caractérisé en ce que** l'au moins un ressort de traction (7) est disposé et supporté aux deux extrémités de telle sorte que celui-ci soit étiré pendant toute la course d'actionnement du levier de pédale (3) présentant une position de départ et une position de fin de course, le levier actif du ressort de traction (7) diminuant toutefois sur le levier de pédale (3), de sorte que le couple agissant sur le levier de pédale (3) diminue.

3. Système de pédale d'embrayage selon la revendication 2, **caractérisé en ce que** l'au moins un ressort de traction (7) est disposé et supporté aux deux extrémités de telle sorte que dans une première position de fonctionnement du ressort de traction (7), qui correspond à la position de sortie du levier de pédale (3) lorsque l'embrayage est fermé, le point de liaison (6) du ressort de traction (7) au niveau du deuxième bras de levier (3b) du levier de pédale (3) soit disposé à l'extérieur d'une droite imaginaire (9) traversant le point de liaison (8) du ressort de traction (7) au niveau du coussinet (1) ou d'un autre composant approprié fixe du véhicule et l'axe de rotation (2) du levier de pédale (3) de telle sorte que lors de l'actionnement du levier de pédale (3) pour l'ouverture de l'embrayage, le point de liaison (6) du ressort de traction (7) au niveau du deuxième bras de levier (3b) du levier de pédale (3) s'approche de ladite droite imaginaire (9).

4. Système de pédale d'embrayage selon la revendication 2 ou 3, **caractérisé en ce que** l'au moins un ressort de traction est disposé et supporté aux deux extrémités de telle sorte que dans une position de fonctionnement supplémentaire du ressort de traction (7), qui correspond à la position de fin de course du levier de pédale (3) lorsque l'embrayage est complètement ouvert, le point de liaison (6) du ressort de traction (7) au niveau du deuxième bras de levier (3b) du levier de pédale (3) est rapproché étroitement contre la droite imaginaire (9) traversant le point de liaison (8) du ressort de traction (7) au niveau du coussinet (1) ou d'un autre composant fixe approprié du véhicule et l'axe de rotation (2) du levier de pédale (3) de telle sorte qu'en tenant compte de la force opposée du système hydraulique d'embrayage dépendant de la course de réglage sur le levier de pédale (3), certes la force opposée appliquée par le ressort de traction (7) sur le levier de pédale (3) diminue, mais l'effet de rappel du ressort de traction (7) pour le passage du levier de pédale (3) dans sa position de départ soit assuré comme avant.

5. Système de pédale d'embrayage selon l'une quelconque des revendications 1 à 4, **caractérisé en ce que** le système hydraulique d'embrayage et la cinématique à ressort de l'au moins un ressort de traction (7) ainsi que ses liaisons au levier de pédale (3) et au coussinet (1) ou à un autre composant fixe approprié du véhicule sont conçus de telle sorte que la somme des forces opposées du système hydraulique d'embrayage agissant sur le levier de pédale (3) et de l'au moins un ressort de traction (7) reste essentiellement identique sur toute la course d'actionnement du levier de pédale (3).

6. Système de pédale d'embrayage selon la revendication 5, **caractérisé en ce que** pour l'ajustement d'une cinématique de ressort optimale, deux ou plus de deux ressorts de traction (7) sont prévus, lesquels présentent à leur tour différentes propriétés de ressort.

7. Système de pédale d'embrayage selon la revendication 6, **caractérisé en ce que** les ressorts de traction (7) sont montés en parallèle et/ou en série.

8. Système de pédale d'embrayage selon l'une quelconque des revendications 1 à 7, **caractérisé en ce que** le coussinet (1) dispose de deux joues latérale (1a, 1b) opposées l'une à l'autre, entre lesquelles le levier de pédale (3) est monté de manière pivotante au moyen d'un axe de palier (10) supporté sur les joues latérales (1a, 1b) et entre lesquelles est guidé l'au moins un ressort de traction (7).

9. Système de pédale d'embrayage selon la revendication 8, **caractérisé en ce que** l'au moins un ressort de traction (7) est réalisé sous forme cintrée dans la région de l'axe de palier (10) ou présente un élément de transfert de force cintré de telle sorte qu'il se produise un rapprochement le plus grand possible du point de liaison (6) du ressort de traction (7) au niveau du deuxième bras de levier (3b) du levier de pédale (3) de 'la droite (9) imaginaire traversant le point de liaison (8) du ressort de traction (7) au niveau du coussinet (1) ou d'un autre composant fixe approprié du véhicule et l'axe de rotation (2) du levier de pédale (3).

10. Véhicule, en particulier véhicule automobile, comprenant un système de pédale d'embrayage selon l'une quelconque des revendications 1 à 9.
